# DEMANDE DE BREVET EUROPEEN

(11) **EP 0 997 442 A1**
(43) Date de publication de la demande: **03.05.2000**
(21) Numéro de dépôt: 99203511.3
(22) Date de dépôt: 26.10.1999
(51) Int. Cl.: C02F 3/30, C02F 3/34

(54) **Procédé de traîtement biologique d'eaux polluées et station de traîtement pour la mise en oeuvre de ce procédé**

(30) Priorité: 28.10.1998 BE 9800775
(71) Demandeur: Hydro-Top Recherche et Développement, 4900 Spa (BE)
(72) Inventeur: Rouxhet, Pascale, 4960 Malmedy (BE)
(74) Mandataire: Vanderperre, Robert

(57) **Abrégé**

Les eaux chargées sont mises en contact avec une masse bactérienne constituée d'un consortium de bactéries, enrichie périodiquement en bactéries et dont l'activité bactérienne est augmentée par injection périodique d'un nutriment minéral. Le mélange est maintenu à une température comprise entre 20 et 40°C environ avec un pH tamponné de 4 à 10. Une station de traitement adéquate pour mettre ce procédé en oeuvre comprend au moins un réacteur biologique anaérobie (11) et au moins un réacteur biologique aérobie (13), chaque réacteur biologique étant muni d'un dispositif (16) agencé pour injecter périodiquement une masse bactérienne, d'un dispositif (17) agencé pour injecter périodiquement un nutriment minéral et d'un dispositif (19) agencé pour maintenir la température du mélange à une valeur prédéterminée.

## Description

La présente invention s'inscrit dans le domaine de l'épuration des eaux. Elle concerne en particulier un traitement biologique des eaux afin d'en éliminer les composés organochlorés, liés ou non aux hydrocarbures contenus dans les eaux, par exemple les eaux résiduaires industrielles, les nappes phréatiques, les eaux de surface, etc.

Un exemple d'organochloré est constitué par les polychlorobiphényls (P C B). Ces composés sont dérivés d'un noyau biphényl portant de 1 à 10 atomes de chlore. On distingue 209 congénères par le nombre et la position des atomes de chlore. Plus ils sont chlorés, plus ils sont stables et moins ils sont volatils.

Les organochlorés ont été utilisés intensivement comme agent plastifiant dans les liquides et les résines isolantes et ininflammables. Ils ont été produits sous la forme d' un mélange de congénères caractérisé par le rapport entre la masse des atomes de chlore et la masse totale. Ainsi l'AROCLOR 1260 est composé pour 60 % de sa masse par des atomes de chlore et ne contient que des congénères qui ont au moins cinq atomes de chlore. Leurs propriétés chimiques ont fait que les P C B se sont très vite et très largement retrouvés dispersés dans tout l'environnement terrestre, leur lilophilie et leur résistance au phénomène de biodégradation ayant pour conséquence qu'ils s'accumulent dans la chaîne trophique. C'est ainsi que l'on en retrouve dans les hautes couches atmosphériques, dans les fosses océaniques et même en Antarctique.

On s'est cependant rendu compte que les PCB sont des micropolluants organiques, apolaires, très hydrophobes et stables, qui présentent des dangers tant pour la santé humaine que pour l'environnement en général. C'est pourquoi, lorsque leur propagation et les dangers qu'ils font courir à la santé mondiale furent découverts, la production de PCB fut interdite. Leur usage ne fut plus autorisé que dans des systèmes clos, mais depuis 1995, une Directive européenne interdit leur utilisation dans les nouvelles installations.

Toutefois, la production mondiale totale de PCB est estimée à 2 millions de tonnes et comme ils ont été conçus en vue d'une utilisation à long terme, plus de la moitié est encore en usage actuellement. Seulement 15 % auraient été détruits, le reste se retrouvant en décharge ou dans l'environnement (on estime la charge minimale globale des océans à 230.000 tonnes). Il semblerait que les concentrations maximales en PCB seront atteintes dans l'environnement vers les années 2010-2020. En Belgique, par exemple, 8400 tonnes de PCB étaient encore présentes dans diverses installations en 1991, dont plus de 95 % dans des transformateurs ou des condensateurs. Le flux de PCB, exprimé sous forme d'AROCLOR 1260, vers la Meuse hollandaise est estimé à 195 kg/an dans l'eau, 380 kg/an dans les matières en suspension, 4 kg/an dans les sédiments et 165 kg/an en évaporation. Ce sont 880 kg/an qui seraient rejetés par la Meuse dans la Mer du Nord, 280 kg/an seraient rejetés par l'Escaut et 8120 kg/an seraient rejetés par le Rhin qui a un débit beaucoup plus élevé.

La toxicité aiguë des PCB est peu élevée chez les oiseaux et les mammifères. Les concentrations nécessaires pour entraîner la mort sont de l'ordre de quelques centaines de µg/g, voire de mg/g. Chez l'homme, on ne connaît pas de cas où une exposition aux PCB seuls ait entraîné des cas de toxicité aiguë. Pour les poissons, une intoxication mortelle par ingestion est déjà possible avec des concentrations de l'ordre du mg/g (1.5 g/kg de poids frais chez la truite arc-en-ciel).

Les problèmes apparaissent, en fait, par intoxication chronique, les effets sont le plus souvent sublétaux. Les contaminations ont des effets pernicieux sur le taux de reproduction, le comportement (le système nerveux est entouré de lipides cibles de la fixation des organochlorés), induisent des effets immunodépresseurs et, peut être, cancérigènes, .... D'autres organochlorés ou des métaux lourds peuvent agir en synergie et augmenter les effets ou abaisser le seuil d'apparition de ceux-ci.

Si les études épidémiologiques en permettent pas de prouver les effets cancérigènes chez l'homme, des recherches récentes "in vitro" sur des cellules ou des tissus humains ont démontré que les PCB pouvaient jouer un rôle dans les cancers du sein et du foie. Dans des épithéliums de sein humain, les PCB et d'autres organochlorés ou benzofuranes ont non seulement un rôle de promoteur du cancer mais aussi limitent les communications intercellulaires favorisant le développement de la maladie. En effet, s'il n'y a plus de communication entre les cellules il ne peut y avoir détection des anomalies et donc intervention du système immunitaire. Les concentrations nécessaires à l'apparition d'effets néfastes a été de l'ordre de grandeur de celles que l'on peut trouver chez une femme européenne en milieu urbain. Plus alarmant a été la découverte que l'association de plusieurs substances abaisse les seuils d'expression de ces phénomènes, démontrant les synergies possibles entre les micropolluants. Chez les animaux de laboratoire, l'apparition de cancers du foie (organe de détoxification), dû à des contaminations par des PCB, est très bien documentée.

Les terribles épidémies qui ont décimés les phoques de la Mer du Nord et de la Baltique ont suscité des études qui ont montré les effets immunodépresseurs des PCB et d'autres organochlorés. Ces effets ont été suffisants pour affaiblir les résistances des populations et permettre l'apparition d'épidémies multiples de maladies normalement bénignes.

Chez les oiseaux, les PCB sont reconnus pour interférer avec le mécanisme de précipitation du calcium servant à la formation de la coquille des oeufs. Fragilisés, ceux-ci peuvent se briser lors de la couvaison.

La liste des problèmes environnementaux liés aux PCB est très longue et probablement n'avons-nous pas encore découvert tous les méfaits de ces composés aux propriétés chimiques si intéressantes. Car, c'est bien là le paradoxe, ce sont les qualités des PCB pour l'industrie (stabilité, hydrophobie) qui en font les défauts quand ils sont relâchés dans la nature. Il est donc tout à fait salutaire de s'employer à limiter leur passage d'un milieu où ils sont appréciés vers un autre où ils n'ont pas leur place.

L'invention a donc pour but d'apporter une solution pour réduire la pollution par les composés organochlorés toxiques.

A cet effet, elle propose un procédé de traitement biologique visant à dégrader les organochlorés présents dans les eaux, par exemple les huiles de transformateurs qui chargent les eaux résiduaires industrielles.

Le procédé suivant l'invention consiste à mettre les eaux chargées en contact avec une masse bactérienne constituée d'un consortium de bactéries et dans laquelle est injecté périodiquement un nutriment minéral propice au développement des bactéries, à une température comprise entre 20 et 40°C environ avec un pH tamponné de 4 à 10. Le nutriment minéral est par exemple constitué d'un mélange d'éléments comprenant notamment de l'azote, du phosphore, du sodium, du magnésium, du fer, du manganèse et une source de carbone.

Le nutriment minéral a pour effet d'augmenter l'activité bactérienne et de favoriser la fixation supérieure des organochlorés sur les cellules bactériennes de manière à augmenter le temps de contact entre les organochlorés et les cellules bactériennes et accroître ainsi la dégradation des organochlorés.

Ce procédé de traitement biologique par intervention bactérienne suivant l'invention permet d'assainir les eaux avec un rendement épuratoire en organo-chlorés supérieur à 90 %. La composition de la masse bactérienne ainsi que la composition du nutriment minéral peuvent être adaptées à chaque application spécifique.

L'invention propose également une station de traitement biologique pour mettre ce procédé en oeuvre.

Une station de traitement suivant l'invention comprend au moins un réacteur biologique anaérobie et au moins un réacteur biologique aérobie, chacun d'eux contenant une masse bactérienne enrichie périodiquement en bactéries, et dont l'activité se trouve augmentée par injection périodique d'un nutriment minéral. Un dispositif de chauffage contrôlé maintient la température de la masse bactérienne à une valeur prédéterminée. Chaque réacteur biologique est suivi d'une chambre de séparation à membrane afin de séparer les boues. Une unité de contrôle électronique commande les dispositifs qui régissent le déroulement du procédé d'épuration biologique.

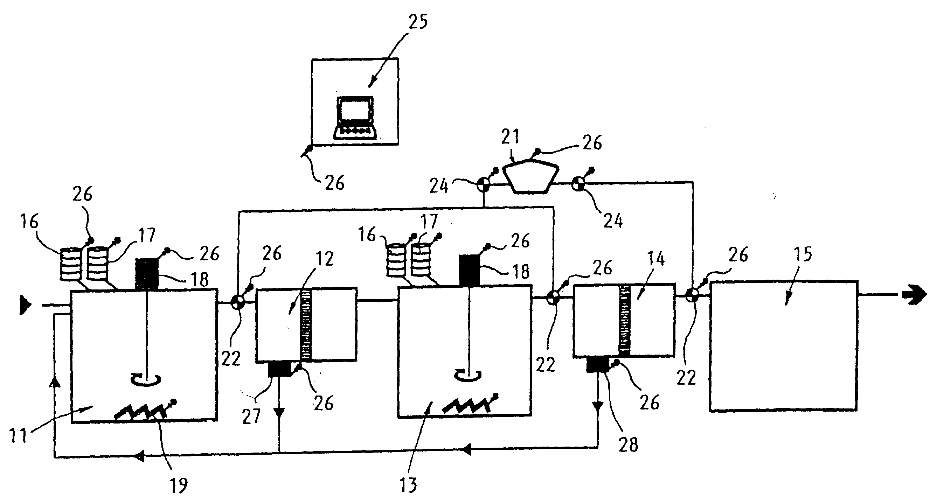

L'invention est exposée plus en détails dans ce qui suit à l'aide du dessin ci-annexé qui représente schématiquement un exemple d'exécution pour une station de traitement biologique propre à mettre en oeuvre le procédé suivant l'invention. Le mode de réalisation illustré comporte un réacteur biologique anaérobie 11 suivi d'un premier séparateur à membrane 12, un réacteur biologique aérobie 13 suivi d'un deuxième séparateur à membrane 14, et un décanteur 15. Chaque réacteur est équipé d'un dispositif d'injection de bactéries 16, d'un dispositif d'injection de nutriment minéral 17 et d'un dispositif de chauffage contrôlé 19, constitué par exemple d'une résistance chauffante et d'une sonde de température. Le signe de référence 18 désigne un dispositif d'homogénéisation de la masse bactérienne.

En fonctionnement, les eaux chargées à épurer sont introduites dans le premier réacteur biologique 11 par la conduite 10 et viennent en contact avec la masse bactérienne contenue dans la cuve du réacteur, puis elles passent dans le séparateur de boues 12. Ensuite, les eaux passent dans le réacteur biologique 13 où elles sont une nouvelle fois mises en contact avec la masse bactérienne contenue dans la cuve de ce réacteur, puis elles passent dans le séparateur de boues 14 avant de traverser le décanteur 15. Périodiquement, les masses bactériennes des réacteurs 11 et 13 se trouvent enrichies en bactéries par les dispositifs d'injection bactéries 16 et périodiquement elles se trouvent activées par le nutriment minéral injecté par les dispositifs d'injection 17. La circulation des eaux traitées et la régénération des membranes des séparateurs 12 et 14 est assurée par un système dépressionnaire symbolisé en 21, associé à un système d'ouverture et de fermeture automatique des vannes 22-24. Les pompes de recyclage 27 et 28 assurent la recirculation des boues. L'ensemble des dispositifs régissant le fonctionnement de la station de traitement sont avantageusement commandés par une unité de contrôle électronique 25 raccordée aux points de connexion 26. L'unité de contrôle 25 peut par exemple étre constituée d'un processeur programmable.

Il est entendu que le mode de réalisation illustré n'est qu'un exemple d'exécution donné sans esprit de limitation aucune afin d'illustrer la mise en oeuvre du procédé de traitement biologique de l'invention. En particulier, le nombre de réacteurs biologiques anaérobies et/ou aérobies peut être quelconque et choisi en fonction de chaque application spécifique, tout comme le sont les compositions des masses bactériennes et du nutriment minéral, ainsi qui a été dit plus haut. De plus, des variantes d'exécution peuvent être apportées à l'installation par l'homme du métier sans pour autant sortir de l'esprit de l'invention.

## Revendications

1. Procédé de traitement biologique d'eaux polluées, caractérisé en ce qu'il comprend les étapes suivantes:
(a) mise en contact des eaux polluées avec une masse bactérienne constituée d'un consortium de bactéries, et enrichie périodiquement en bactéries,
(b) injection périodique dans la masse bactérienne, d'un nutriment minéral choisi de manière à favoriser le développement et la multiplication des bactéries,
(c) réglage de la température du mélange de manière à la maintenir à une valeur comprise entre et 40°C environ,
(d) séparation des boues et circulation des eaux assainies.

2. Procédé suivant la revendication 1, caractérisé en ce que le mélange de la masse bactérienne et du nutriment minéral est réglé à un pH tamponné de 4 à 10.

3. Procédé suivant la revendication 1 ou 2, caractérisé en ce que le nutriment minéral est constitué d'un mélange d'azote, des éléments minéraux et une source de carbone.

4. Procédé suivant l'une quelconque des revendications précédentes, caractérisé en ce que l'on homogénéise le mélange de la masse bactérienne et du nutriment minéral.

5. Station de traitement biologique d'eaux polluées, caractérisé en ce qu'elle comprend au moins un réacteur biologique anaérobie (11) et au moins un réacteur biologique aérobie (13), chaque réacteur biologique comprenant une cuve pour recevoir les eaux à traiter et contenant une masse bactérienne, un premier dispositif d'injection (16) agencé pour injecter périodiquement des bactéries afin d'enrichir ladite masse bactérienne, un second dispositif d'injection (17) agencé pour injecter périodiquement un nutriment minéral dans la masse bactérienne, et un dispositif de réglage de température (19) agencé pour maintenir la température du mélange à une valeur prédéterminée.

6. Station de traitement suivant la revendication 5, caractérisée en ce que chaque réacteur biologique comprend en outre un dispositif d'homogénéisation (18) pour homogénéiser la masse bactérienne.

7. Station de traitement suivant l'une quelconque des revendications 5 et 6, caractérisée en ce que, en aval de chaque réacteur biologique, est connectée une chambre de séparation à membrane (12, 14) agencée de manière à bloquer la masse bactérienne.

8. Station de traitement suivant l'une quelconque des revendications 5 à 7, caractérisée en ce qu'elle comprend un système dépressionnaire (21) associé à un système d'ouverture et de fermeture automatique des vannes (22, 24) afin d'assurer la circulation des eaux et/ou la régénération des membranes des chambres de séparation.

9. Station de traitement suivant l'une quelconque des revendications 5 à 8, caractérisée en ce que la dernière chambre de séparation à membrane (14) est connectée en aval à un décanteur (15).

10. Station de traitement suivant l'une quelconque des revendications 5 à 9, caractérisée en ce qu'elle comprend une unité de contrôle électronique (25) agencée et connectée de manière à commander l'ensemble des dispositifs de contrôle et d'alimentation de la station.
